# EUROPÄISCHE PATENTSCHRIFT

(11) **EP 1 525 128 B1**
(45) Veröffentlichungstag und Bekanntmachung des Hinweises auf die Patenterteilung: **07.05.2008**
(21) Anmeldenummer: 03766329.1
(22) Anmeldetag: 28.07.2003
(51) Int. Cl.: B60T 13/575, B60T 13/57

(54) **BREMSKRAFTVERSTÄRKER MIT NOTBREMSASSISTENTFUNKTION**
BRAKE SERVO UNIT COMPRISING AN EMERGENCY BRAKE AUXILIARY FUNCTION
SYSTEME D'ASSISTANCE DE FREINAGE A FONCTION D'ASSISTANCE DE FREIN DE SECOURS

(30) Priorität: 30.07.2002 DE 10234693
(43) Veröffentlichungstag der Anmeldung: 27.04.2005
(73) Patentinhaber: Lucas Automotive GmbH, 56070 Koblenz (DE)
(72) Erfinder: BRAVO VILLAMAYOR, Ernesto, E-31012 Pamplona, Navarra (ES)
(74) Vertreter: Beyer, Andreas
(86) Internationale Anmeldenummer: PCT/EP2003/008318
(87) Internationale Veröffentlichungsnummer: WO 2004/012975

(56) Entgegenhaltungen:
- WO-A-01/32488
- WO-A-99/26826
- DE-A- 19 902 710
- US-A1- 2002 069 751

## Beschreibung

Die vorliegende Erfindung betrifft Bremskraftverstärker, insbesondere für Kraftfahrzeuge, gemäß dem Oberbegriff des Patentanspruchs 1, wie sie z.B. aus der WO 99/26826 bekannt sind. Solche Bremskraftverstärker sind in der Regel als Unterdruckbremskraftverstärker ausgeführt und dienen dazu, dem Fahrer eines Fahrzeuges beim Bremsen eine Hilfskraft zur Verfügung zu stellen, um die vom Fahrer aufzubringende Bremsbetätigungskraft auf einem komfortablen Niveau zu halten. Es sind auch rein hydraulisch arbeitende Bremskraftverstärker bekannt und die vorliegende Erfindung ist deshalb nicht auf Unterdruckbremskraftverstärker beschränkt.

Unabhängig von der Art der Hilfskrafterzeugung, z.B. mittels Unterdruck oder auf hydraulische Art und Weise, weist ein Bremskraftverstärker üblicherweise ein Steuerventil zum Steuern der von ihm erzeugten Verstärkungskraft, also des Maßes der Hilfskraft, sowie ein Steuerventilgehäuse auf. In das Steuerventilgehäuse erstreckt sich zumindest teilweise ein Eingangsglied, mit Hilfe dessen ein Bremswunsch des Fahrers dem Bremskraftverstärker mitgeteilt wird. Die über das Eingangsglied in den Bremskraftverstärker eingeleitete Eingangskraft und die vom Bremskraftverstärker daraufhin erzeugte Hilfskraft werden an einem Ausgangsglied zusammengeführt und von diesem an einen dem Bremskraftverstärker nachgeschalteten Hauptzylinder einer hydraulischen Fahrzeugbremsanlage abgegeben. Ist der Bremskraftverstärker ein Unterdruckbremskraftverstärker, besteht das Ausgangsglied in der Regel aus einem gummielastischen Material in Scheibenform, das in einem Endstück des Steuerventilgehäuses eingekammert ist und sich flüssigkeitsähnlich verhält. Zwischen dem Ausgangsglied und dem Eingangsglied befindet sich ein relativ zum Steuerventilgehäuse axial bewegbares Druckstück. Die in einen Bremskraftverstärker eingeleitete Betätigungskraft fließt also über das Eingangsglied und von dort, gegebenenfalls über zwischengeschaltete Bauteile wie Ventilkolben oder ähnliches, zum Druckstück und weiter zum Ausgangsglied.

Schon seit längerem ist bekannt, dass die meisten Fahrer eines Kraftfahrzeuges in einer Notbremssituation die Bremse nicht stark genug betätigen. Dieses Verhalten ist insbesondere dann von Nachteil, wenn die Fahrzeugbremsanlage mit einem Antiblockiersystem ausgerüstet ist, denn die maximale Bremswirkung einer mit Antiblockiersystem ausgerüsteten Bremsanlage kann nur erreicht werden, wenn jedes Fahrzeugrad beim Bremsen in einen schlupfgeregelten Zustand gerät, d.h. wenn jedes Fahrzeugrad so stark abgebremst wird, dass die Schlupfregelung des Antiblockiersystems aktiv wird. Dieser Zustand wird nur erreicht, wenn jedem Fahrzeugrad ein ausreichend hoher hydraulischer Betätigungsdruck zugeführt wird, was in der Praxis häufig nicht der Fall ist.

Als Lösung dieses Problems wurde eine in der Fachliteratur zumeist als "Bremsassistent" bezeichnete Einrichtung vorgeschlagen. Kurz gesagt sorgt dieser Bremsassistent dafür, dass in einer Notbremssituation, also dann, wenn das Eingangsglied sehr schnell relativ weit in Betätigungsrichtung bewegt wird, der Bremskraftverstärker seine maximale Hilfskraft zur Verfügung stellt. Frühe Bremsassistent-Lösungen verwendeten einen Elektromagnet, der nach Erkennen einer Notbremssituation das Luftsteuerventil eines Unterdruckbremskraftverstärkers unabhängig von der tatsächlichen Eingangskraft in Offenstellung hielt, so dass sich im Unterdruckbremskraftverstärker die maximale Druckdifferenz zwischen einer Unterdruckkammer und einer Arbeitskammer und damit die maximal mögliche Hilfskraft aufbauen konnte. Um ohne einen kostenaufwendigen Elektromagneten dieselbe Wirkung zu erreichen, schlagen spätere Lösungen vor, dass sich das bereits genannte Druckstück in einer Notbremssituation am Steuerventilgehäuse abstützt, so dass die vom Hauptzylinder in den Bremskraftverstärker zurück übertragenen hydraulischen Reaktionskräfte nicht auf das Eingangsglied des Bremskraftverstärkers und damit auf das Bremspedal zurückwirken, sondern vom Bremskraftverstärker aufgenommen werden. Auf diese Weise kann mit einer relativ geringen Eingangs- bzw. Betätigungskraft eine hohe Ausgangskraft erzielt werden, was in einer Notbremssituation erwünscht ist. Lösungen der zuletzt genannten Art sind aus der bereits erwähnten WO 99/26826 und der EP 0 901 950 B1 bekannt.

Die zuletzt angesprochenen Lösungen sind allerdings mechanisch relativ aufwendig und deshalb nicht viel kostengünstiger als die ebenfalls erwähnte elektromagnetische Lösung.

Der Erfindung liegt deshalb die Aufgabe zugrunde, einen Bremskraftverstärker mit Bremsassistentfunktion bereitzustellen, der mechanisch einfacher und damit kostengünstiger als bisher bekannte Lösungen ist.

Diese Aufgabe ist ausgehend von dem eingangs genannten Stand der Technik, der die Abstützung des Druckstücks realisiert, indem sich das Druckstück mittels eines von einer Feder vorgespannten Kupplungselementes lösbar an dem Steuerventilgehäuse abstützt, erfindungsgemäß dadurch gelöst, dass die Feder und das Kupplungselement als einstückiges Kopplungsbauteil ausgeführt sind, das am Steuerventilgehäuse festgelegt ist. Ohne Beeinträchtigung der gewünschten Funktion wird auf diese Weise eine deutlich verminderte Komplexität des mechanischen Aufbaus und damit eine spürbare Kostenreduktion erreicht.

Gemäß einer bevorzugten Ausgestaltung der Erfindung hat das Kopplungsbauteil eine im wesentlichen hohlzylindrische Form und umgibt einen mit dem Eingangsglied und dem Druckstück in Wirkverbindung stehenden Ventilkolben konzentrisch. An dem Ventilkolben, der in der Regel unmittelbar mit dem Eingangsglied in Verbindung steht, ist ein Ventilsitz ausgebildet, der sogenannte Atmosphärendichtsitz, dessen durch eine Verschiebung des Eingangsgliedes in Betätigungsrichtung bewirktes Öffnen dazu führt, dass Atmosphärendruck in die Arbeitskammer eines Unterdruckbremskraftverstärkers einströmt und sich demzufolge eine Verstärkungskraft aufbaut. Die Anordnung eines hohlzylindrischen Kopplungsbauteiles um einen solchen Ventilkolben ist nicht nur platzsparend, sondern auch funktionell vorteilhaft.

Bei bevorzugten Ausführungsformen des erfindungsgemäßen Bremskraftverstärkers verjüngt sich das Kopplungsbauteil in Richtung des Druckstücks konisch. Bei solchen Ausgestaltungen weist das Kopplungsbauteil im Bereich seiner konischen Verjüngung vorzugsweise mehrere radial einwärts vorgespannte Federzungen auf. Bei einer solchen Ausführungsform übernehmen die Federzungen sowohl die Funktion der federnden Vorspannung als auch die Kopplungsfunktion.

Bei Ausführungsformen mit einem Kopplungsbauteil, das radial einwärts vorgespannte Federzungen aufweist, wirken die freien Enden der Federzungen vorzugsweise mit einer auf dem Ventilkolben verschiebbar angeordneten Rasthülse gleitend zusammen. Das eine Ende der Rasthülse ist dabei so ausgebildet, dass es sich an dem Ventilkolben abstützen kann, während das andere Rasthülsenende so ausgebildet ist, dass es sich an dem Druckstück abstützen kann. Um eine solche Rasthülse gegen eine Rückverschiebung relativ zum Steuerventilgehäuse zu arretieren und gleichzeitig am Steuerventilgehäuse abzustützen, womit auch das sich an der Rasthülse abstützende Druckstück in gleicher Weise arretiert und abgestützt ist, weist die Rasthülse vorzugsweise einen Rastbund auf, hinter den die freien Enden der Federzungen bei Überschreiten einer in Richtung auf das Ausgangsglied erfolgenden vorbestimmten Verschiebung des Druckstücks relativ zum Steuerventilgehäuse verrasten. Der Rastbund kann in einer einfachen Ausführungsform beispielsweise durch eine stufenförmige Verjüngung des Außendurchmessers der Rasthülse gebildet sein. In einer anderen Ausführungsform ist der Rastbund ein von der Außenumfangsfläche der Rasthülse radial nach außen hervorstehender Vorsprung, der vorzugsweise umlaufend als Ringbund ausgebildet ist. Die Rasthülse und das Druckstück, die hier als zwei separate Teile beschrieben worden sind, können auch einstückig miteinander verbunden sein. Auch muss die Rasthülse nicht auf dem Ventilkolben angeordnet sein, sondern kann sich in Betätigungsrichtung an den Ventilkolben anschließen, also zwischen dem Ventilkolben und dem Druckstück angeordnet und falls gewünscht einstückig mit Letzterem ausgeführt sein. Die "Rasthülse" braucht dann auch keine Hülse mehr zu sein, sondern kann wie das Druckstück aus Vollmaterial bestehen.

Bei einer bevorzugten Ausführungsform des erfindungsgemäßen Bremskraftverstärkers ist, um den zuvor beschriebenen Verrastungszustand wieder lösen zu können, auf dem Ventilkolben eine Entkoppelungshülse verschiebbar angeordnet, deren eines, dem Eingangsglied zugewandtes Ende dazu ausgebildet ist, sich an einem mit dem Ventilkolben verbundenen Querriegel abstützen zu können, und deren anderes Ende dazu ausgebildet ist, bei einer in Richtung auf das Eingangsglied erfolgenden Verschiebung des Steuerventilgehäuses relativ zur Entkoppelungshülse in Berührung mit dem Kopplungsbauteil zu geraten und die freien Enden der Federzungen radial auswärts zu drücken, um Letztere aus ihrer Raststellung hinter dem Rastbund der Rasthülse zu lösen. Um diese Aufgabe erfüllen zu können, muss die Entkoppelungshülse starr genug ausgerührt sein, d.h. sie muss der radial einwärts gerichteten Federvorspannung des Kopplungsbauteils ohne weiteres widerstehen können. Das dem Kopplungsbauteil zugewandte Ende der Entkoppelungshülse ist vorzugsweise ringförmig, wenn das Kopplungsbauteil hohlzylindrisch ist.

Bei allen Ausführungsformen des erfindungsgemäßen Bremskraftverstärkers besteht das Kopplungsbauteil vorzugsweise aus Federstahl. Damit ist gewährleistet, dass das Kopplungsbauteil zum einen die gewünschte federnde Vorspannung erzeugt und zum anderen dazu in der Lage ist, die Abstützkräfte auf das Steuerventilgehäuse zu übertragen, ohne selbst zerstört zu werden.

Zur ortsfesten Verankerung des Kopplungsbauteiles im Steuerventilgehäuse ist das Kopplungsbauteil vorzugsweise an seinem dem Eingangsglied zugewandten Ende mit einem radial auswärts vorstehenden Flansch versehen, der einen im Steuerventilgehäuse ausgebildeten Vorsprung hintergreifen kann, so dass der Flansch mittels eines in eine benachbarte Nut des Steuerventilgehäuses eingesetzten Sprengrings im Steuerventilgehäuse festgelegt ist. Um die Stabilität des Kopplungsbauteiles gegenüber einer durch Übertragungskräfte bewirkten Verformung zu erhöhen, weist vorzugsweise ein sich von dem radial auswärts vorstehenden Flansch in Richtung auf das freie Ende des Kopplungsbauteiles hin erstreckender Abschnitt desselben einen Außendurchmesser auf, der bis auf übliche Toleranzen dem Innendurchmesser einer Bohrung des Steuerventilgehäuses entspricht, in der dieser Abschnitt des Kopplungsbauteiles angeordnet ist. Auf diese Weise kann der genannte Abschnitt sich gegen die Wandung der Bohrung im Steuerventilgehäuse abstützen, ohne dass es zu einer Verformung des Kopplungsbauteiles kommt. Die Wanddicke des genannten Abschnitts des Kopplungsbauteiles braucht bei einer solchen Ausführung nicht so dick wie sonst erforderlich gewählt zu werden.

Ein Ausführungsbeispiel eines erfindungsgemäßen Bremskraftverstärkers wird im folgenden anhand der einzigen schematischen Figur, die ein Steuerventil des erfindungsgemäßen Bremskraftverstärkers im Längsschnitt zeigt, näher erläutert.

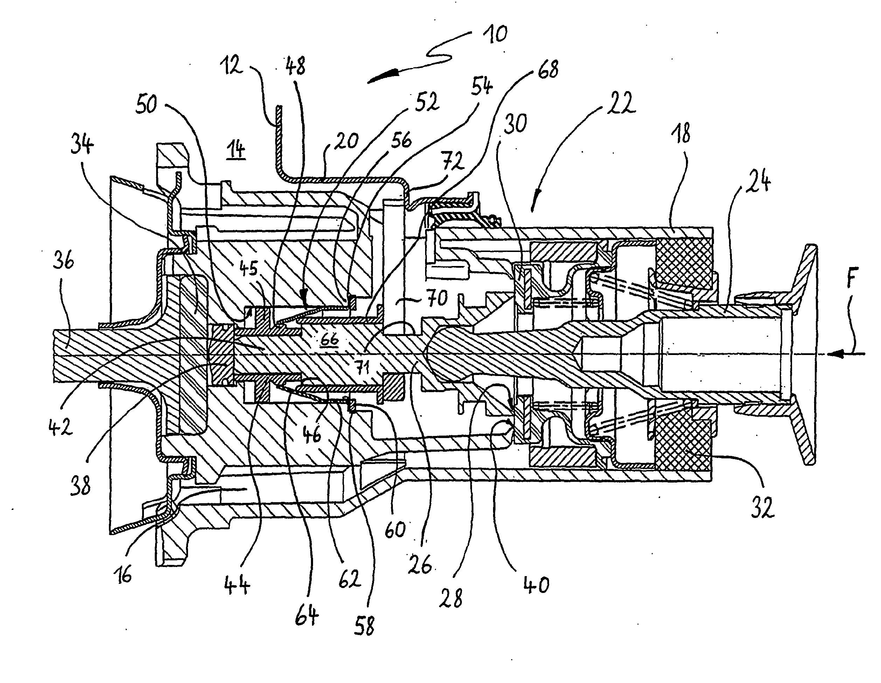

Die Figur zeigt im Längsschnitt den hier interessierenden Teil eines allgemein mit 10 bezeichneten Unterdruckbremskraftverstärkers für eine hydraulische Kraftfahrzeugbremsanlage. Der Bremskraftverstärker 10, dem ein hier nicht dargestellter Hauptbremszylinder nachgeschaltet ist, hat ein in der Figur nur ansatzweise gezeigtes Gehäuse 12 aus Blechschalen, in dem eine nicht dargestellte bewegliche Wand eine Arbeitskammer 14 und eine Unterdruckkammer 16 abdichtend voneinander trennt.

Die bewegliche Wand ist mit einem Steuerventilgehäuse 18 fest verbunden, das in einem rohrförmigen Endabschnitt 20 des Bremskraftverstärkergehäuses 12 gleitend verschiebbar geführt ist. Das Steuerventilgehäuse 18 ist Teil eines Steuerventils 22 zum wahlweisen Verbinden entweder der Arbeitskammer 14 mit der Umgebungsatmosphäre oder der Unterdruckkammer 16 mit der Arbeitskammer 14.

Im Betrieb des Bremskraftverstärkers 10 steht die Unterdruckkammer 16 ständig in Verbindung mit einer Unterdruckquelle, beispielsweise dem Ansaugtrakt eines Verbrennungsmotors, um in der Unterdruckkammer fortwährend einen Unterdruck gegenüber der Umgebungsatmosphäre aufrechtzuerhalten. In einem Ausgangszustand des Bremskraftverstärkers 10 ist auch die Arbeitskammer 14 auf diesen Unterdruck evakuiert. Wird nun das Steuerventil 22 durch Aufbringen einer Eingangskraft F auf ein Eingangsglied 24 betätigt, verschiebt sich das Eingangsglied 24 und ein mit diesem kraftübertragend gekoppelter Ventilkolben 26 in das Bremskraftverstärkergehäuse 12 hinein, d.h. in der Figur nach links. Ein am Ventilkolben 26 ausgebildeter ringförmiger Atmosphärendichtsitz 28 hebt dadurch von einem ringförmigen Ventildichtglied 30 ab und ermöglicht so, dass Atmosphärendruck durch einen Filter 32 in das Steuerventilgehäuse 18 hinein und am jetzt offenen Atmosphärendichtsitz 28 vorbei in die Arbeitskammer 14 strömt. An der die Arbeitskammer 14 von der Unterdruckkammer 16 trennenden beweglichen Wand baut sich somit eine Druckdifferenz auf, und die daraus resultierende Kraft trachtet danach, die bewegliche Wand und das mit ihr fest verbundene Steuerventilgehäuse 18 nach links zu verschieben. Diese Kraft ist die vom Bremskraftverstärker 10 erzeugte Hilfs- oder Servokraft. Sie wird über ein gummielastisches Ausgangsglied 34, das in einem dem Hauptzylinder zugewandten Endabschnitt des Steuerventilgehäuses 18 eingekammert ist, an den Hauptzylinder abgegeben, beispielsweise mittels eines nur teilweise dargestellten Stößels 36.

Zwischen dem gummielastischen Ausgangsglied 34 und dem Ventilkolben 26 ist ein Druckstück 38 axial verschieblich angeordnet, über das die auf das Eingangsglied 24 aufgebrachte Eingangskraft F auf das Ausgangsglied 34 übertragen wird. In dem Ausgangsglied 34 werden also die von einem Benutzer aufgebrachte Eingangskraft F und die vom Bremskraftverstärker 10 erzeugte Hilfskraft zusammengeführt und anschließend an den Hauptzylinder abgegeben.

Löst der Benutzer die Bremse wieder, bewegt sich der Ventilkolben 26 zurück nach rechts, stößt gegen das Ventildichtglied 30 und drückt jenes etwas nach rechts, so dass das Ventildichtglied 30 von einem im Steuerventilgehäuse 18 ausgebildeten, ringförmigen Unterdruckdichtsitz 40 abhebt, wodurch eine Verbindung zwischen der Unterdruckkammer 16 und der Arbeitskammer 14 hergestellt ist und die Arbeitskammer 14 wieder evakuiert wird, um den zu Beginn eines Bremsvorgangs erforderlichen Ausgangszustand wieder herzustellen. Diese allgemeine Funktion eines Unterdruckbremskraftverstärkers ist Fachleuten auf diesem Gebiet wohlbekannt und braucht daher nicht weiter erläutert zu werden.

Zur Bereitstellung einer sogenannten Bremsassistentfunktion sind im Steuerventil 22 weitere Bauteile angeordnet, die im folgenden näher erläutert werden. Mit "Bremsassistentfunktion" ist hier gemeint, dass der Bremskraftverstärker 10 einem Benutzer in einer Notbremssituation die höchstmögliche Bremskraftunterstützung, also die höchstmögliche Hilfskraft, zur Verfügung stellt, auch wenn der Benutzer eine entsprechende Eingangskraft F nicht oder jedenfalls nicht über den gesamten Bremsvorgang hinweg aufrechterhält. Während einer normalen Bremsung verschiebt sich wie beschrieben der Ventilkolben 26 relativ zum Steuerventilgehäuse 18. Auf einem dem Ausgangsglied 34 zugewandten durchmesserkleineren Endabschnitt 42 des Ventilkolbens 26 ist eine Rasthülse 44 mit einem radial auswärts vorstehenden Ringflansch 45 schwimmend angeordnet, die entgegen der hier gezeigten Ausführungsform auch einstückig mit dem Druckstück 38 ausgebildet sein kann. Das dem Eingangsglied 24 zugewandte Ende der Rasthülse 44 stützt sich an einer durch die Durchmesserverkleinerung gebildeten Stufe 46 des Ventilkolbens 26 ab, so dass die Rasthülse 44 bei einer Betätigung des Bremskraftverstärkers 10 vom Ventilkolben 26 nach links mitgenommen wird. Das gegenüberliegende, andere Ende der Rasthülse 44 schließt bündig mit dem zugehörigen Ende des Ventilkolbens 26 ab und steht wie dieses in Kontakt mit dem Druckstück 38.

Auf der Außenumfangsfläche der Rasthülse 44 ist ein hier in Umfangsrichtung durchgehender Rastbund 48 ausgebildet, dessen Funktion später noch näher erläutert wird.

In einer Bohrung 50 des Steuerventilgehäuses 18 ist ein hier aus Federstahl bestehendes, allgemein hohlzylindrisches Kopplungsbauteil 52 angeordnet. An seinem dem Eingangsglied 24 zugewandten Ende weist das Kopplungsbauteil 52 einen radial auswärts vorstehenden Flansch 54 auf, der einen stufenförmigen Vorsprung 56 in der Bohrung 50 hintergreift. Benachbart zum Vorsprung 56 ist in der Wandung der Bohrung 50 eine Ringnut 58 ausgebildet, in die ein Sprengring 60 eingesetzt ist, der den Flansch 54 des Kopplungsbauteiles 52 im Steuerventilgehäuse 18 befestigt.

An den Flansch 54 schließt sich ein in Richtung auf das Ausgangsglied 34 hin erstreckender Abschnitt 62 des Kopplungsbauteiles 52 an, dessen Außendurchmesser bis auf übliche Toleranzen dem Innendurchmesser der Bohrung 50 entspricht. Mit diesem Abschnitt 62 kann sich das Kopplungsbauteil 52 an der Wandung der Bohrung 50 abstützen. Zu seinem freien Ende hin verjüngt sich das Kopplungsbauteil 52 konisch. Der Bereich der konischen Verjüngung ist durch mehrere radial einwärts vorgespannte, durch nicht dargestellte Schlitze voneinander getrennte Federzungen 64 gebildet, deren freie Enden auf der Oberfläche des Rastbundes 48 ruhen.

Auf einem Abschnitt 66 des Ventilkolbens 26 ist eine Entkoppelungshülse 68 axial verschieblich angeordnet, die sich mit ihrem dem Eingangsglied 24 zugewandten Ende, das hier flanschartig ausgebildet ist, an einem Querriegel 70 abstützen kann, der mit dem Ventilkolben 26 verbunden und in einer Nut 71 des Ventilkolbens 26 axial verschieblich ist. Der Querriegel 70 dient dazu, eine Ausgangsstellung des Steuerventils 22 festzulegen, indem sein freies Ende sich in der Ausgangsstellung an einem Anschlag 72 des Bremskraftverstärkergehäuses 12 abstützt. Diese Ausgangsstellung wird auch als LTF-Stellung (Lost-Travel-Free Stellung) bezeichnet. Aus dieser Ausgangsstellung heraus ist der Bremskraftverstärker 10 ohne Totweg betätigbar.

Wie bereits erläutert, verschiebt sich bei einer normalen Bremsung der Ventilkolben 26 relativ zum Steuerventilgehäuse 18, wodurch der Atmosphärendichtsitz 28 geöffnet wird, und nimmt dabei die Rasthülse 44 mit. Sowohl die Rasthülse 44 als auch der Ventilkolben 26 drücken auf das Druckstück 38, welches sich ebenfalls relativ zum Steuerventilgehäuse 18 verschiebt und in das gummielastische Ausgangsglied 34 eindringt. Die Federzungen 64, die im in der Figur dargestellten Ausgangszustand auf dem ringförmigen freien Ende der Entkoppelungshülse 68 aufliegen, halten dabei die Entkoppelungshülse 68 und damit auch den in der Nut 71 schwimmend aufgenommenen Querriegel 70 zurück. Durch den Aufbau der entsprechenden Hilfskraft im Bremskraftverstärker 10 folgt das Steuerventilgehäuse 18 nach und der Querriegel 70 löst sich von dem Anschlag 72 am Bremskraftverstärkergehäuse 12. Erhöht ein Benutzer des Bremskraftverstärkers 10 die Eingangskraft F nicht weiter, stellt sich ein der jeweiligen Bremsintensität zugehöriger Gleichgewichtszustand ein, in dem der Atmosphärendichtsitz 28 wieder am Ventildichtglied 30 anliegt. Die Oberfläche des Rastbundes 48 bewegt sich bei einer solchen Normalbremsung lediglich unter den freien Enden der Federzungen 64 hin und her, da die Relatiwerschiebung der Rasthülse 44 bei einer Normalbremsung kleiner ist als die Erstreckung der Oberfläche des Rastbundes 48 in Axialrichtung.

Erst wenn die Relativverschiebung des Ventilkolbens 26 und damit der Rasthülse 44 zum Steuerventilgehäuse 18 größer ist und ein vorbestimmtes Maß überschreitet, wie z.B. bei einer Notbremsung der Fall, wird die Oberfläche des Rastbundes 48 aus dem Bereich unter den freien Enden der Federzungen 64 wegbewegt und die Federzungen 64 drücken durch ihre radial einwärts wirkende federnde Vorspannung die Entkoppelungshülse 68 etwas zurück in Richtung auf das Eingangsglied 24, d.h. in der Figur nach rechts, wodurch auch der Querriegel 70 in der Nut 71 im Ventilkolben 26 entsprechend verschoben wird. Die freien Enden der Federzungen 64 schnappen hinter den Rastbund 48 und koppeln damit die Rasthülse 44 im wesentlichen starr mit dem Steuerventilgehäuse 18. Diese Koppelung bewirkt, dass nun alle vom hydraulischen Bremssystem zurückwirkenden Reaktionskräfte nicht mehr auf den Ventilkolben 26 und damit über das Eingangsglied 24 zurück auf das Bremspedal wirken, sondern über das Druckstück 38, die Rasthülse 44 und Koppelungsbauteil 52 in das Steuerventilgehäuse 18 eingeleitet werden. Das bedeutet, dass sämtliche Reaktionskräfte vom Bremskraftverstärker 10 allein aufgefangen werden, solange der Benutzer des Bremskraftverstärkers 10 nicht so kräftig auf das Eingangsglied 24 tritt, dass der Ventilkolben 26 am Druckstück 38 anliegt. In diesem Zustand kann deshalb der Atmosphärendichtsitz 28 geöffnet gehalten werden, ohne dass der Benutzer des Bremskraftverstärkers 10 nennenswerte Gegenkräfte überwinden muss. Anders ausgedrückt entspricht dieser Zustand einer Änderung des Kraftübersetzungsverhältnisses des Bremskraftverstärkers 10 gegen Unendlich.

Die maximal mögliche Relativverschiebung des Ventilkolbens 26 zum Steuerventilgehäuse 18 ist durch den axialen Abstand festgelegt, den der Ringflansch 45 der Rasthülse 44 vom Grund der Bohrung 50 hat. Dieser Abstand ist kleiner als die axiale Erstreckung der Nut 71 im Ventilkolben 26.

Will ein Benutzer des Bremskraftverstärkers 10 eine Notbremsung beenden, im Verlaufe derer es zu der beschriebenen starren Koppelung des Druckstücks 38 mit dem Steuerventilgehäuse 18 gekommen ist, reduziert er die auf das Eingangsglied 24 ausgeübte Eingangskraft F entsprechend, woraufhin sich der Ventilkolben 26 vom Druckstück 38 trennt, der Atmosphärendichtsitz 28 sich wieder an das Ventildichtglied 30 anlegt und Letzteres entgegen der Betätigungsrichtung etwas nach rechts verlagert, wodurch sich der Unterdruckdichtsitz 40 vom Ventildichtglied 30 abhebt und eine Verbindung zwischen der Arbeitskammer 14 und der Unterdruckkammer 16 hergestellt ist. Infolge dieser Verbindung wird die Druckdifferenz an der nicht dargestellten beweglichen Wand des Bremskraftverstärkers 10 verringert und das Steuerventilgehäuse 18 bewegt sich zurück nach rechts. Sobald sich der Querriegel 70 am Anschlag 72 abstützt, kann sich auch die Entkoppelungshülse 68 nicht weiter nach rechts bewegen, so dass bei einem weiteren Rückhub des Steuerventilgehäuses 18 das ringförmige freie Ende der Entkoppelungshülse 68 von innen gegen die Federzungen 64 stößt und diese radial nach außen drängt. Anders ausgedrückt laufen die Innenflächen der Federzungen 64 auf das Ende der Entkoppelungshülse 68 auf und werden bei einer weiteren Rückbewegung des Steuerventilgehäuses 18 dann zwangsweise radial nach außen gedrängt. Der Verrastungszustand wird auf diese Weise gelöst und die Oberfläche des Rastbundes 48 gelangt wieder unter die freien Enden der Federzungen 64.

## Patentansprüche

1. Bremskraftverstärker (10), insbesondere für Kraftfahrzeuge, mit einem Steuerventil (22) zum Steuern der vom Bremskraftverstärker erzeugten Verstärkungskraft, das ein Steuerventilgehäuse (18), ein Eingangsglied (24), ein Ausgangsglied (34) und ein zwischen dem Eingangsglied (24) und dem Ausgangsglied (34) angeordnetes, auf das Ausgangsglied (34) wirkendes Druckstück (38) aufweist, das in Abhängigkeit einer von dem Eingangsglied (24) hervorgerufenen Relativbewegung zwischen dem Druckstück (38) und dem Steuerventilgehäuse (18) mittels eines von einer Feder vorgespannten Kupplungselementes lösbar an dem Steuerventilgehäuse (18) abgestützt ist,
**dadurch gekennzeichnet, dass** die Feder und das Kupplungselement als einstückiges Kopplungsbauteil (52) ausgeführt sind, das am Steuerventilgehäuse (18) festgelegt ist.

2. Bremskraftverstärker nach Anspruch 1,
**dadurch gekennzeichnet, dass** das Kopplungsbauteil (52) eine im wesentlichen hohlzylindrische Form hat und einen mit dem Eingangsglied (24) und dem Druckstück (38) in Wirkverbindung stehenden Ventilkolben (26) konzentrisch umgibt.

3. Bremskraftverstärker nach Anspruch 1 oder 2,
**dadurch gekennzeichnet, dass** das Kopplungsbauteil (52) sich in Richtung des Druckstücks (38) konisch verjüngt.

4. Bremskraftverstärker nach Anspruch 3,
**dadurch gekennzeichnet, dass** das Kopplungsbauteil (52) im Bereich seiner konischen Verjüngung mehrere radial einwärts vorgespannte Federzungen (64) aufweist.

5. Bremskraftverstärker nach Anspruch 4,
**dadurch gekennzeichnet, dass** die freien Enden der Federzungen (64) mit einer auf dem Ventilkolben (26) verschiebbar angeordneten Rasthülse (44) gleitend zusammenwirken, deren eines Ende dazu ausgebildet ist, sich an dem Ventilkolben (26) abzustützen, und deren anderes Ende dazu ausgebildet ist, sich an dem Druckstück (38) abzustützen.

6. Bremskraftverstärker nach Anspruch 5,
**dadurch gekennzeichnet, dass** die Rasthülse (44) einen Rastbund (48) aufweist, hinter den die freien Enden der Federzungen (64) bei Überschreiten einer vorbestimmten Verschiebung des Druckstücks (38) relativ zum Steuerventilgehäuse (18) in Richtung auf das Ausgangsglied (34) verrasten.

7. Bremskraftverstärker nach einem der Ansprüche 2 bis 6,
**dadurch gekennzeichnet, dass** auf dem Ventilkolben (26) eine Entkoppelungshülse (68) verschiebbar angeordnet ist, deren eines, dem Eingangsglied (24) zugewandtes Ende dazu ausgebildet ist, sich an einem mit dem Ventilkolben (26) verbundenen Querriegel (70) abzustützen, und deren anderes Ende dazu ausgebildet ist, bei einer Verschiebung des Steuerventilgehäuses (18) relativ zur Entkoppelungshülse (68) in Richtung auf das Eingangsglied (24) in Berührung mit dem Kopplungsbauteil (52) zu geraten und die freien Enden der Federzungen (64) radial auswärts zu drücken, um letztere aus ihrer Raststellung hinter dem Rastbund (48) der Rasthülse (44) zu lösen.

8. Bremskraftverstärker nach einem der vorhergehenden Ansprüche,
**dadurch gekennzeichnet, dass** das Kopplungsbauteil (52) aus Federstahl besteht.

9. Bremskraftverstärker nach einem der vorhergehenden Ansprüche,
**dadurch gekennzeichnet, dass** das Kopplungsbauteil (52) an seinem dem Eingangsglied (24) zugewandten Ende einen radial auswärts vorstehenden Flansch (54) aufweist, der einen im Steuerventilgehäuse (18) ausgebildeten Vorsprung (56) hintergreift und der mittels eines in eine benachbarte Nut (58) des Steuerventilgehäuses (18) eingreifenden Sprengringes (60) im Steuerventilgehäuse (18) ortsfest gehalten ist.

10. Bremskraftverstärker nach Anspruch 9,
**dadurch gekennzeichnet, dass** ein sich von dem radial auswärts vorstehenden Flansch (54) in Richtung auf das freie Ende hin erstreckender Abschnitt (62) des hohlzylindrischen Kopplungsbauteiles (52) einen Außendurchmesser aufweist, der bis auf übliche Toleranzen dem Innendurchmesser einer Bohrung (50) des Steuerventilgehäuses (18) entspricht, in der der Abschnitt (62) des Kopplungsbauteiles (52) angeordnet ist.

## Claims

1. Brake booster (10), in particular for motor vehicles, comprising a control valve (22) for controlling the boosting force generated by the brake booster, which control valve (20) comprises a control valve housing (18), an input element (24), an output element (34) and a thrust piece (38), which is disposed between the input element (24) and the output element (34) and acts upon the output element (34) and which in dependence upon a relative movement between the thrust piece (38) and the control valve housing (18) caused by the input element (24) is supported releasably against the control valve housing (18) by means of a coupling element biased by a spring,
**characterized in that** the spring and the coupling element are designed as a one-piece coupling component (52) that is fastened to the control valve housing (18).

2. Brake booster according to claim 1,
**characterized in that** the coupling component (52) has a substantially hollow cylindrical shape and concentrically surrounds a valve piston (26), which is workingly connected to the input element (24) and the thrust piece (38).

3. Brake booster according to claim 1 or 2,
**characterized in that** the coupling component (52) tapers conically in the direction of the thrust piece (38).

4. Brake booster according to claim 3,
**characterized in that** the coupling component (52) in the region of its conical taper has a plurality of spring tongues (64) biased in a radially inward direction.

5. Brake booster according to claim 4,
**characterized in that** the free ends of the spring tongues (64) cooperate in a sliding manner with a detent sleeve (44), which is disposed displaceably on the valve piston (26) and of which one end is designed to be supported against the valve piston (26) and the other end is designed to be supported against the thrust piece (38).

6. Brake booster according to claim 5,
**characterized in that** the detent sleeve (44) comprises a detent collar (48), behind which the free ends of the spring tongues (64) latch when a predetermined displacement of the thrust piece (38) relative to the control valve housing (18) in the direction of the output element (34) is exceeded.

7. Brake booster according to one of claims 2 to 6,
**characterized in that** displaceably disposed on the valve piston (26) is a decoupling sleeve (68), of which one end facing the input element (24) is designed to be supported against a transverse locking bar (70) connected to the valve piston (26) and the other end is designed, upon a displacement of the control valve housing (18) relative to the decoupling sleeve (68) in the direction of the input element (24), to come into contact with the coupling component (52) and press the free ends of the spring tongues (64) radially outwards in order to release the latter from their latched position behind the detent collar (48) of the detent sleeve (44).

8. Brake booster according to one of the preceding claims,
**characterized in that** the coupling component (52) is made of spring steel.

9. Brake booster according to one of the preceding claims,
**characterized in that** the coupling component (52) at its end facing the input element (24) has a radially outwardly projecting flange (54), which engages behind a projection (56) formed in the control valve housing (18) and is held stationary in the control valve housing (18) by means of a snap ring (60), which engages into an adjacent groove (58) of the control valve housing (18).

10. Brake booster according to claim 9,
**characterized in that** a portion (62) of the hollow cylindrical coupling component (52) extending from the radially outwardly projecting flange (54) in the direction of the free end has an outside diameter, which apart from normal tolerances corresponds to the inside diameter of a bore (50) of the control valve housing (18), in which bore the portion (62) of the coupling component (52) is disposed.

## Revendications

1. Système d'assistance de freinage (10), en particulier pour automobiles, comprenant, pour réguler la force d'amplification produite par le système d'assistance de freinage, une soupape de commande (22) qui présente une cage (18), un élément d'entrée (24), un élément de sortie (34) et une pièce de pression (38) qui, disposée entre l'élément d'entrée (24) et l'élément de sortie (34) et agissant sur l'élément de sortie (34), est soutenue sur la cage de la soupape de commande (18) de manière détachable, au moyen d'un élément d'accouplement précontraint par un ressort, en fonction d'un mouvement relatif induit par l'élément d'entrée (24) entre la pièce de pression (38) et la cage de la soupape de commande (18),
**caractérisé en ce que** le ressort et l'élément d'accouplement sont réalisés sous la forme d'une pièce d'accouplement monobloc (52) qui est fixée sur la cage de la soupape de commande (18).

2. Système d'assistance de freinage selon la revendication 1,
**caractérisé en ce que** la pièce d'accouplement monobloc (52) présente une forme pour l'essentiel cylindrique creuse et enveloppe concentriquement un piston de soupape (26) fonctionnellement relié à l'élément d'entrée (24) et à la pièce de pression (38).

3. Système d'assistance de freinage selon la revendication 1 ou 2,
**caractérisé en ce que** la pièce d'accouplement (52) se rétrécit coniquement vers la pièce de pression (38).

4. Système d'assistance de freinage selon la revendication 3,
**caractérisé en ce que** la pièce d'accouplement (52) présente dans la zone de son rétrécissement conique plusieurs languettes flexibles (64) précontraintes radialement vers l'intérieur.

5. Système d'assistance de freinage selon la revendication 4,
**caractérisé en ce que** les extrémités libres des languettes flexibles (64) coopèrent en glissement avec une douille d'arrêt (44) qui est disposée déplaçable sur le piston de soupape (26) et dont une extrémité est conçue pour s'appuyer sur le piston de soupape (26), et l'autre extrémité, pour s'appuyer sur la pièce de pression (38).

6. Système d'assistance de freinage selon la revendication 5,
**caractérisé en ce que** la douille d'arrêt (44) présente un collet d'arrêt (48) derrière lequel les extrémités libres des languettes flexibles (64) viennent se bloquer lorsque la pièce de pression (38) se déplace au-delà d'un certain point vers l'élément de sortie (34), par rapport à la cage de la soupape de commande (18).

7. Système d'assistance de freinage selon l'une des revendications 2 à 6,
**caractérisé en ce qu'**il est disposé sur le piston de soupape (26) une douille de désaccouplement (68), dont une extrémité tournée vers l'élément d'entrée (24) est conçue pour s'appuyer sur une barre transversale (70) reliée au piston de la soupape (26); et l'autre extrémité, pour venir en contact avec la pièce d'accouplement (52) lorsque la cage de la soupape de commande (18) se déplace par rapport à la douille de désaccouplement (68), vers l'élément d'entrée (24), et pour presser les extrémités libres des languettes flexibles (64) radialement vers l'extérieur de manière à dégager ces dernières de leur position d'arrêt à l'arrière du collet d'arrêt (48) de la douille d'arrêt (44).

8. Système d'assistance de freinage selon l'une des revendications précédentes,
**caractérisé en ce que** la pièce d'accouplement (52) est constituée d'acier à ressort.

9. Système d'assistance de freinage selon l'une des revendications précédentes,
**caractérisé en ce que** la pièce d'accouplement (52) présente à son extrémité tournée vers l'élément d'entrée (24) une bride (54) saillant radialement vers l'extérieur qui vient en prise derrière une saillie (56) réalisée dans la cage de la soupape de commande (18) et qui est maintenue stationnaire dans la cage de la soupape de commande (18) au moyen d'une bague élastique (60) en prise dans une rainure voisine (58) de la cage de la soupape de commande (18).

10. Système d'assistance de freinage selon la revendication 9,
**caractérisé en ce qu'**un segment (62) de la pièce d'accouplement cylindrique creuse, lequel s'étend de la bride (54) saillant radialement vers l'extérieur vers l'extrémité libre, présente un diamètre extérieur qui correspond - tolérances d'usage mises à part - au diamètre intérieur d'un alésage (50) de la cage de la soupape de commande (18), dans lequel est disposé ledit segment (62) de la pièce d'accouplement (52).
